# EUROPÄISCHE PATENTANMELDUNG

(11) **EP 1 447 378 A1**
(43) Veröffentlichungstag der Anmeldung: **18.08.2004**
(21) Anmeldenummer: 04000921.9
(22) Anmeldetag: 17.01.2004
(51) Int. Cl.: C01B 13/02, C07B 41/00

(54) **Singulett Sauerstoff Generierung aus Sn(II)-Salz und Ozon**

(30) Priorität: 12.02.2003 AT 2052003
(71) Anmelder: DSM Fine Chemicals Austria Nfg GmbH & Co KG, 4021 Linz (AT)
(72) Erfinder: Jary, Walther, 4853 Steinbach am Attersee (AT); Pöchlauer, Peter, 4040 Linz (AT); Falk, Heinz, 4040 Linz (AT); Gangelberger, Thorsten, 4020 Linz (AT)
(74) Vertreter: Lindinger, Ingrid

(57) **Zusammenfassung**

Verfahren zur Generierung von ¹O₂, bei welchem ein Sn(II)-Salz der Formel

SnXₙ (I)

in der X für ein Anion aus der Gruppe Trifluormethansulfonat, Acetat, Formiat, Oxalat, Laktat, Malonat, Malat, Tartrat, Citrat, Orthophosphat, Sulfat, Chlorid und Perchlorat und n für 1 oder 2 steht in einem organischen Lösungsmittel bei einer Temperatur von -80°C bis 20°C mit 1 bis 2 mol Ozon pro mol Zinnverbindung versetzt wird und der sich bildende ¹O₂ direkt zur Oxidation von organischen Substraten, die mit ¹O₂ reagieren, eingesetzt wird.

## Beschreibung

Die einzige Singulett Sauerstoff Oxidation (¹O₂-Ox), die zur Zeit industriell durchgeführt wird, ist die photochemische ¹O₂-Ox, bei welcher der ¹O₂ auf photochemischen Weg generiert wird. Der Nachteil dieses Verfahrens ist durch die hohen Kosten der benötigten photochemischen Einrichtungen, sowie durch eine beschränkte Lebensdauer gegeben. Die benötigten Lampen degenerieren durch Verschmutzung der Glasoberfläche relativ rasch während der Oxidation. Außerdem eignet sich dieses Verfahren nicht für gefärbte Substrate. Das Verfahren ist eigentlich nur für Feinchemikalien geeignet, die im kleineren Maßstab hergestellt werden. (La Chimica e l'Industria, 1982, Vol. 64, Seite 156)
Aus diesem Grund wurde versucht andere Verfahrensvarianten für die ¹O₂-Ox zu finden, die für die ¹O₂-Ox von nicht-wasserlöslichen, hydrophoben organischen Substraten geeignet sind.

In J. Am. Chem. Soc., 1968, **90**, 975 wird beispielsweise die klassische "dark" ¹O₂-Ox beschrieben, bei welcher ¹O₂ nicht photochemisch sondern chemisch generiert wird. Dabei werden hydrophobe Substrate mittels eines Hypochlorit/H₂O₂ - Systems in einem Lösungsmittelgemisch aus Wasser und organischem Lösungsmittel oxidiert. Dieses Verfahren hat jedoch lediglich einige synthetische Anwendungen gefunden, da viele Substrate in dem benötigten Medium nur schwer löslich sind. Die Einsatzmöglichkeit ist außerdem aufgrund von Nebenreaktionen zwischen Hypochlorit und Substrat oder Lösungsmittel ziemlich eingeschränkt. Außerdem wird in der Gasphase ein großer Teil des ¹O₂ deaktiviert. Weiters ist dieses Verfahren nicht für den industriellen Maßstab geeignet, da es im organischen Medium zur Anlagerung des Hypochlorits an H₂O₂ kommt und ein großer Überschuss an H₂O₂ zur Unterdrückung der Nebenreaktion von Substrat mit Hypochlorit benötigt wird. Ein zusätzlicher Nachteil ergibt sich durch das Anfallen stöchiometrischer Salzmengen.

Eine Variante der "dark" ¹O₂-Ox, die nicht auf Hypochlorit basiert und somit obige Nachteile zum Teil vermeiden soll, ist beispielsweise aus J. Org. Chem., 1989, **54**, 726 oder J. Mol. Cat., 1997, **117**, 439 bekannt, wonach einige wasserlösliche organische Substrate mit H₂O₂ und einem Molybdatkatalysator in Wasser als Lösungsmittel oxidiert werden. Gemäß Membrane Lipid Oxid. Vol. II, 1991, 65 ist die ¹O₂-Ox von wasserunlöslichen, organischen Substraten mit dem Molybdat/ H₂O₂ -System schwierig, da angenommen wurde, dass keines der üblichen Lösungsmittel geeignet ist, die von Molybdat katalysierte Disproportionierung von H₂O₂ in Wasser und ¹O₂ aufrecht zu erhalten. Die Verwendung von Molybdän-Katalysatoren bringt jedoch auch andere Nachteile mit sich. So katalysieren sie neben der H₂O₂ - Disproportionierung auch andere, unerwünschte Oxidationen von manchen Substraten. Allylalkohole können beispielsweise nicht effektiv mit dem Molybdat/ H₂O₂-System peroxidiert werden, da diese Substanzgruppe von Molybdän in Gegenwart von H₂O₂ epoxidiert wird. Ein weiterer Nachteil dieser Katalysatoren ist der relativ geringe pH-Bereich in dem diese funktionieren. Diese Katalysatoren können nur im basischen Bereich zwischen pH 9 und pH 12 eingesetzt werden, die Verwendung dieses Systems ist demnach nicht geeignet für saure Bedingungen.

Eine weitere Möglichkeit ¹O₂ chemisch zu generieren stellt beispielsweise das Erwärmen von Triphenylphosphitozonid dar, das aus Triphenylphosphit und Ozon erhalten wird. Diese Methode wird jedoch, wie etwa in J. Org. Chem., Vol. 67, No 8, 2002, Seite 2418 beschrieben, nur für Mechanismusstudien angewendet, da Triphenylphosphit eine teure und zudem gefährliche Chemikalie darstellt.
Bei der basenkatalysierten Disproportionierung von Persäuren werden neben ¹O₂ weitere reaktive Verbindungen gebildet, die zu Nebenprodukten führen.

Aufgabe der vorliegenden Erfindung war es demnach, eine Möglichkeit zu finden ¹O₂ unter Vermeidung obiger Nachteile zu generieren.

Unerwarteterweise konnte diese Aufgabe durch die Verwendung von Ozon und einer Sn(II)-Verbindung gelöst werden.

Gegenstand der vorliegenden Erfindung ist demnach ein Verfahren zur Generierung von ¹O₂, das dadurch gekennzeichnet ist, dass ein Sn(II)-Salz der Formel

SnXₙ (I)

in der X für ein Anion aus der Gruppe Trifluormethansulfonat, Acetat, Formiat, Oxalat, Laktat, Malonat, Malat, Tartrat, Citrat, Orthophosphat, Sulfat, Chlorid, Perchlorat und n für 1 oder 2 steht in einem organischen Lösungsmittel bei einer Temperatur von -80°C bis 20°C mit 1 bis 2 mol Ozon pro mol Zinnverbindung versetzt wird und der sich bildende ¹O₂ direkt zur Oxidation von organischen Substraten, die mit ¹O₂ reagieren, eingesetzt wird.

Bei dem erfindungsgemäßen Verfahren wird ¹O₂ durch die Umsetzung eines Sn(II)-Salzes der Formel (I) mit Ozon generiert.
In der Formel (I) bedeutet X ein Anion aus der Gruppe Trifluormethansulfonat, Acetat, Formiat, Oxalat, Laktat, Malonat, Malat, Tartrat, Citrat, Orthophosphat, Sulfat, Chlorid, Perchlorat und n in Abhängigkeit vom Anion 1 oder 2.
Bevorzugte Sn(II)-Salze sind Zinn(II)trifluormethansulfonat oder Zinn(II)acetat.
Das Sn(II)-Salz wird in einem organischen Lösungsmittel gelöst. Als Lösungsmittel eignen sich Ethylacetat, Butylacetat, Methanol, Ethanol, Dichlormethan oder Essigsäure. Bevorzugt wird Ethylacetat eingesetzt.
Anschließend wird auf -80°C bis 20°C, bevorzugt auf -80°C bis -5°C abgekühlt und Ozon zugeführt.
Ozon wird bei dem erfindungsgemäßen Verfahren in einer Menge von 1 bis 2,0 mol pro mol Sn(II)-Salz zugesetzt. Bevorzugt wird ein Äquivalent Ozon eingesetzt.

Der sich bildende ¹O₂ wird sodann zur Oxidation von organischen Substraten, die mit ¹O₂ reagieren eingesetzt.

Dies kann erfindungsgemäß dadurch erfolgen, dass bereits während der Umsetzung des Sn(II)-Salzes mit Ozon eine Lösung des entsprechenden Substrates zudosiert wird. Die Dosierung erfolgt dabei bevorzugt kontinuierlich.
Als Lösungsmittel für das Substrat eignen sich dabei wiederum Ethylacetat, Butylacetat, Methanol, Ethanol, Dichlormethan oder Essigsäure.
Bevorzugt wird Ethylacetat eingesetzt.
Bevorzugt wird das Lösungsmittel eingesetzt, das auch zum Lösen des Sn(II)-Salzes verwendet wird.
Anschließend wird gegebenenfalls überschüssiges Ozon ausgeblasen, beispielsweise durch Spülen mit Argon oder Stickstoff und die verbleibende Reaktionslösung, die das Oxidationsprodukt enthält, aufgearbeitet.

Die Zugabe der Substratlösung kann jedoch auch erst nach erfolgter Umsetzung des Sn(II)-Salzes mit Ozon und abschließendem Entfernen von gegebenenfalls überschüssigem Ozon erfolgen.
Erfolgt die Umsetzung des Sn(II)-Salzes mit Ozon bei tieferen Temperaturen (z.B. -80°C), so kann die mit der Substratlösung versetzte Reaktionslösung gegebenenfalls erwärmt werden, beispielsweise auf -10°C.

Die Aufarbeitung der Reaktionslösung, die das Oxidationsprodukt enthält, erfolgt durch übliche Methoden wie etwa Extraktion, Trocknung und Isolierung des Oxidationsproduktes, beispielsweise durch Säulenchromatographie.

Als organische Substrate, die mit ¹O₂ reagieren können folgende Verbindungen eingesetzt werden: Olefine, die eine oder mehrere, d.h. bis zu 10, bevorzugt bis zu 6, besonders bevorzugt bis zu 4 C=C-Doppelbindungen enthalten; elektronenreiche Aromaten, wie C₆-C₅₀, bevorzugt bis C₃₀, besonders bevorzugt bis C₂₀ Phenole, Polyalkylbenzole, Polyalkoxybenzolen; polycyclische Aromaten mit 2 bis 10, bevorzugt bis 6, besonders bevorzugt bis 4 aromatischen Ringen; Sulfide, wie etwa Alkylsulfide, Alkenylsulfide, Arylsulfide, die am Schwefelatom entweder mono- oder disubstituiert sind, sowie Heterocyclen mit einem O-, N- oder S-Atom im Ring, wie beispielsweise C₄-C₅₀, bevorzugt bis C₃₀, besonders bevorzugt bis C₂₀ Furane, C₄-C₅₀, bevorzugt bis C₃₀, besonders bevorzugt bis C₂₀ Pyrrole, C₄-C₆₀, bevorzugt bis C₃₀, besonders bevorzugt bis C₂₀ Thiophene. Die Substrate können dabei einen oder mehrere Substituenten, wie Halogen (F, Cl, Br, J), Cyanid, Carbonylgruppen, Hydroxylgruppen, C₁-C₅₀, bevorzugt bis C₃₀, besonders bevorzugt bis C₂₀ Alkoxygruppen, C₁-C₅₀, bevorzugt bis C₃₀, besonders bevorzugt bis C₂₀ Alkylgruppen, C₆-C₅₀, bevorzugt bis C₃₀, besonders bevorzugt bis C₂₀ Arylgruppen, C₂-C₅₀, bevorzugt bis C₃₀, besonders bevorzugt bis C₂₀ Alkenylgruppen, C₂-C₅₀, bevorzugt bis C₃₀, besonders bevorzugt bis C₂₀ Alkinylgruppen, Carbonsäuregruppen, Estergruppen, Amidgruppen, Aminogruppen, Nitrogruppen, Silylgruppen, Silyloxygruppen, Sulfongruppen, Sulfoxidgruppen, aufweisen. Weiters können die Substrate substituiert sein mit einem oder mehreren NR¹ R²-Resten, in denen R₁ oder R₂ gleich oder verschieden sein können sowie H; C₁-C₅₀, bevorzugt bis C₃₀, besonders bevorzugt bis C₂₀ Alkyl; Formyl; C₂-C₅₀, bevorzugt bis C₃₀, besonders bevorzugt bis C₂₀ Acyl; C₇-C₅₀, bevorzugt bis C₃₀, besonders bevorzugt bis C₂₀ Benzoyl bedeuten, wobei R¹ und R² auch gemeinsam einen Ring bilden können, wie z.B. in einer Phthalimidogruppe.
Beispiele für geeignete Substrate sind: 2-Buten; Isobuten; 2-Methyl-1-buten; 2-Hexen; 1,3-Butadien; 2,3-Dimethylbuten; Δ^{9,10}-Octalin, 2-Phthalimido-4-Methyl-3-penten; 2,3,-Dimethyl-1,3-Butadien; 2,4-Hexadien; 2-Chlor-4-methyl-3-penten; 2-Brom-4-methyl-3-penten; 1-Trimethylsilylcyclohexen; 2,3-Dimethyl-2-butenyl-*para*tolylsulfon; 2,3-Dimethyl-2-butenyl-*para*-tolylsulfoxid; *N*-Cyclohexenylmorpholin; 2-Methyl-2-norbornen; Terpinolen; α-Pinen; β-Pinen; β-Citronellol; Ocimen; Citronellol; Geraniol; Farnesol; Terpinen; Limonen; trans-2,3-Dimethylacrylsäure; α-Terpinen; Isopren; Cyclopentadien; 1,4-Diphenylbutadien; 2-Ethoxybutadien; 1,1'-Dicyclohexenyl; Cholesterol; Ergosterolacetat; 5-Chlor-1,3-cyclohexadien; 3-Methyl-2-buten-1-ol; 3,5,5-Trimethylcyclohex-2-en-1-ol; Phenol, 1,2,4-Trimethoxybenzol, 2,3,6-Trimethylphenol, 2,4,6-Trimethylphenol, 1,4-Dimethylnaphthalen, Furan, Furfurylalcohol, Furfural, 2,5-Dimethylfuran, Isobenzofuran, Dibenzylsulfid, (2-Methyl-5-*tert*-butyl)phenylsulfid u.s.w.

Aus den Substraten wird durch die erfindungsgemäße Oxidation das korrespondierende Oxidationsprodukt erhalten. Aus Alkenen, (polycyclischen) Aromaten oder Heteroaromaten werden insbesondere Hydroperoxide, Peroxide, Ketone oder Alkohole erhalten.

Durch das erfindungsgemäße Verfahren wird ¹O₂ auf einfache und effiziente Weise generiert. Ein weiterer Vorteil des Verfahrens ist, das bei der Reaktion kein Wasser gebildet wird.

### Beispiel 1: Generierung von Singulett-Sauerstoff mittels Ozon und Zinn(II)-trifluormethansulfonat bei -80°C.

1,52 g (4,1 mmol) Zinn(II)trifluormethansulfonat wurden in 150 ml Etylacetat gelöst und in einer Batch-Ozonolyse Apparatur auf -80°C gekühlt. Diese Lösung wurde bei -80°C mit einem Äquivalent Ozon versetzt. Anschließend wurde überschüssiges Ozon durch Spülen der Apparatur mit Argon ausgeblasen. Der so generierte Zinnozonid Komplex wurde mit 0,25 g (1,8 mmol) α-Terpinen in 10 ml Ethylacetat versetzt und die Reaktionslösung auf -10°C erwärmt. Diese Lösung wurde über eine Fritte mit Celite in eine Vakuumflasche, gefüllt mit einer Natriumchlorid-Eis Mischung abgesaugt.
Diese Mischung wurde auf Raumtemperatur erwärmt und die organische Phase von der wässrigen getrennt. Die wässrige Phase wurde erneut mit Ethylacetat extrahiert. Die vereinigten organischen Fraktionen wurden mit Wasser gewaschen und anschließend mit Natriumsulfat getrocknet. Natriumsulfat wurde abfiltriert und die erhaltene Lösung im Vakuum eingedampft.
Aus dem erhaltenen gelben Öl wurde das Singulett-Oxidationsprodukt (Ascaridol) mittels Säulenchromatographie isoliert. Dazu wurden 10 g Kieselgel 60A als stationäre Phase und eine Mischung aus n-Hexan:MTBE 9:1 als mobile Phase verwendet.
Die vereinigten Fraktionen, welche Ascaridol enthielten, wurden eingedampft, wobei man ein gelbes Öl erhielt. Das Produkt wurde mittels ¹H-NMR und Dünnschichtchromatographie charakterisiert.
**Ausbeute:** 75 mg Ascaridol (25% d.Th).

### Beispiel 2-5: Generierung von Singulett-Sauerstoff mittels Ozon und Zinn(II)-trifluormethansulfonat bei -10°C.

1 Äquivalent Zinn(II)trifluormethansulfonat bezogen auf das jeweilig eingesetzte Substrat wurden in 150 ml Ethylacetat gelöst und in einer Batch-Ozonolyse Apparatur auf -10°C gekühlt. Diese Lösung wurde bei -10°C mit einem Äquivalent Ozon versetzt. Während der Ozonolyse wurden der Reaktionslösung die in der Tabelle angegebene Menge an Substrat gelöst in 10 ml Ethylacetat mittels einer Perfusorpumpe kontinuierlich zudosiert. Anschließend wurde überschüssiges Ozon durch Spülen der Apparatur mit Argon ausgeblasen. Diese Lösung wurde über eine Fritte mit Celite in eine Vakuumflasche, gefüllt mit einer Natriumchlorid-Eis Mischung abgesaugt.
Diese Mischung wurde auf Raumtemperatur erwärmt und die organische Phase von der wässrigen getrennt. Die wässrige Phase wurde erneut mit Ethylacetat extrahiert. Die vereinigten organischen Fraktionen wurden mit Wasser gewaschen und anschließend mit Natriumsulfat getrocknet. Natriumsulfat wurde abfiltriert und erhaltene Lösung im Vakuum eingedampft.

Das Produkt wurde mittels ¹H-NMR, HPLC und Dünnschichtchromatographie charakterisiert und quantifiziert. Die Resultate sind in nachstehender Tabelle zusammengefasst.

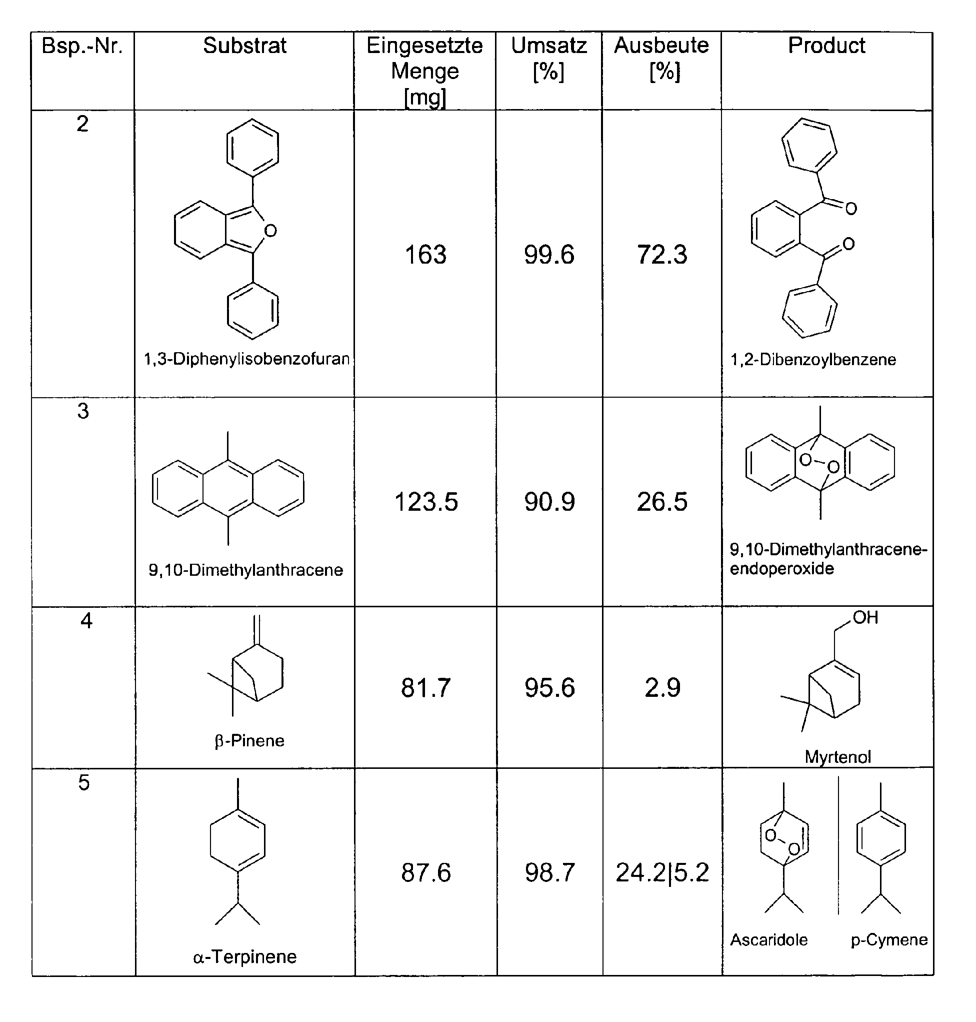

## Patentansprüche

1. Verfahren zur Generierung von ¹O₂, **dadurch gekennzeichnet, dass** ein Sn(II)-Salz der Formel
SnXₙ (I)
in der X für ein Anion aus der Gruppe Trifluormethansulfonat, Acetat, Formiat, Oxalat, Laktat, Malonat, Malat, Tartrat, Citrat, Orthophosphat, Sulfat, Chlorid oder Perchlorat und n für 1 oder 2 steht in einem organischen Lösungsmittel bei einer Temperatur von -80°C bis 20°C mit 1 bis 2,0 mol Ozon pro mol Zinnverbindung versetzt wird und der sich bildende ¹O₂ direkt zur Oxidation von organischen Substraten, die Mit ¹O₂ reagieren, eingesetzt wird.

2. Verfahren nach Anspruch 1, **dadurch gekennzeichnet, dass** als Sn(II)-Salz Zinn(II)trifluormethansulfonat oder Zinn(II)acetat eingesetzt wird.

3. Verfahren nach Anspruch 1, **dadurch gekennzeichnet, dass** als organisches Lösungsmittel Ethylacetat, Butylacetat, Methanol, Ethanol, Dichlormethan oder Essigsäure verwendet wird.

4. Verfahren nach Anspruch 1, **dadurch gekennzeichnet, dass** die Reaktionstemperatur bei -80 bis -5°C liegt.

5. Verfahren nach Anspruch 1, **dadurch gekennzeichnet, dass** ein Äquivalent Ozon eingesetzt wird.

6. Verfahren nach Anspruch 1, **dadurch gekennzeichnet, dass** bereits während der Umsetzung des Sn(II)-Salzes mit Ozon eine Lösung eines organischen Substrates, das mit ¹O₂ reagiert, zudosiert wird.

7. Verfahren nach Anspruch 1, **dadurch gekennzeichnet, dass** anschließend an die Umsetzung des Sn(II)-Salzes mit Ozon, nach Entfernen von gegebenenfalls überschüssigem Ozon eine Lösung eines organischen Substrates, das mit ¹O₂ reagiert, zudosiert wird.

8. Verfahren nach Anspruch 6 oder 7, **dadurch gekennzeichnet, dass** als Lösungsmittel für das Substrat Ethylacetat, Butylacetat, Methanol, Ethanol, Dichlormethan oder Essigsäure verwendet wird.
